# EUROPEAN PATENT APPLICATION

(11) **EP 4 503 195 A1**
(43) Date of publication of application: **05.02.2025**
(21) Application number: 23189016.1
(22) Date of filing: 01.08.2023
(51) Int. Cl.: H01M 4/62, H01M 4/139, C08G 2/00, H01M 4/1391

(54) **COMPOSITION FOR BATTERY ELECTRODE**

(71) Applicant: BYK-Chemie GmbH, 46483 Wesel (DE)
(72) Inventor: VON HAGEN, Robin, 46483 Wesel (DE); TAKAI, Megumu, 46483 Wesel (DE); WEIß, Sebastian, 46483 Wesel (DE); SAMOL, David, 46483 Wesel (DE); YANG, Xin, 46483 Wesel (DE); SUGIOKA, Yu, 46483 Wesel (DE)
(74) Representative: Altana IP Department

(57) **Abstract**

The invention relates to a composition comprising
a) a polymer having
i) a polyamine core comprising a plurality of amine groups and comprising the structure of formula (I) 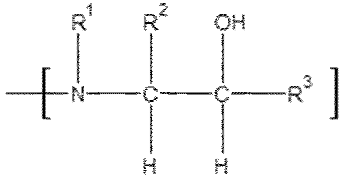 wherein R¹ is H or part of the polyamine core, R² is H or an organic group, R³ is H or an organic group, with the proviso that at least one of R² and R³ is H,
ii) a plurality of polyester segments linked to the polyamine core via ionic bonds, and

b) an electrically conductive carbon-based material
wherein the weight ratio of polymer a) to electrically conductive carbon-based material b) in the composition of the invention is in the range of 70:100 to 3:100.

## Description

The invention relates to a composition comprising a polymer and an electrically conductive carbon-based material, to the use of the composition for preparing an electrode for a rechargeable battery, to a process of preparing a rechargeable electrical battery electrode, to an electrical battery electrode, and to a rechargeable electrical battery.

WO 2021/028519 A describes a dispersant comprising a polyester derived from a polylactone and an amine, having an acid value of less than 15 mg KOH/g. This document also describes the use of the dispersant in compositions for rechargeable lithium ion battery electrodes. It has been found that the dispersants described in this document do not always provide satisfactory results for dispersing electrically conductive carbon-based materials.

US 9574121 B2 relates to a process for preparing an amine adduct, in which a polyamine component, a polyester component and an epoxide-functional component are reacted. The amine adduct is suitable as a wetting agent and dispersant, especially for coatings and plastics applications.
There is an ongoing need for improved compositions for preparing electrodes for rechargeable batteries, in particular for compositions comprising electrically conductive carbon-based materials having a low viscosity.

The invention provides a composition comprising
a) a polymer having
   i) a polyamine core comprising a plurality of amine groups and comprising the structure of formula (I) 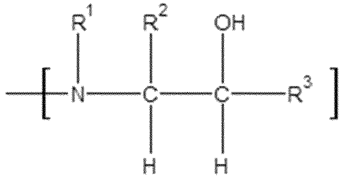 wherein R¹ is H or part of the polyamine core, R² is H or an organic group, R³ is H or an organic group, with the proviso that at least one of R² and R³ is H,
   ii) a plurality of polyester segments linked to the polyamine core via ionic bonds, and
b) an electrically conductive carbon-based material,
wherein the weight ratio of polymer a) to electrically conductive carbon-based material b) in the composition of the invention is in the range of 70:100 to 3:100.

As mentioned above, the polymer of the composition of the invention comprises a polyamine core. Examples of suitable polyamine cores are aliphatic linear polyamines, such as diethylenetriamine (DETA), triethylenetetramine (TETA), tetraethylenepentamine (TEPA), pentaethylenehexamine, hexaethyleneheptamine and higher homologs, higher linear condensates with the general formula of NH₂-(C₂H₄NH)ₙ-C₂H₄-NH₂ with n>5, dipropylenetriamine, (3-(2-aminoethyl)aminopropylamine, N,N-bis(3-aminopropyl)methylamine, tetramethyliminobispropylamine, N,N-dimethyldipropylenetriamine, bis-(3-dimethylaminopropyl)amine and N,N'-bis(3-aminopropyl)-ethylenediamine.
Suitably, the polyamine core is an organic polyamine compound, which contains on average at least 2, preferably 6 to 600, tertiary amino groups.
Tertiary amino groups typically cause good adsorption on surfaces of solids and have only a low tendency to cause undesirable reaction. In addition, the tertiary amino groups enable high-molecular-weight structures, whereas the viscosity remains relatively low.
Typically, branched aliphatic polyamines, especially poly (C2-C4)-alkyleneamines, with primary, secondary and tertiary amino groups are used. Particularly preferred polyamine cores are polyethyleneimines. Polyethyleneimines are commercially available, for example under the trade designation Lupasol^{®} from BASF or Epomin^{®} from Nippon Shokubai. These are produced by known methods, e.g., by the polymerization of ethyleneimine.
Usually, in the polyamine core the molar ratio of primary to secondary amino groups is in the range of 1:1 to 1:5. Generally, the molar ratio of primary to tertiary amino groups is in the range of 3:1 to 1:3.
In typical embodiments, the polyamine core has a weight average molecular weight in the range 200 to 200000, preferably 250 to 40000, and particularly preferably 300 to 25000 g/mol.
A too low molecular weight may cause weak adsorption on the surfaces of solids, while a too high molecular weight can be problematic in terms of manageability and solubility.
The weight average molecular weight of the polyamine core may suitably be determined using light scattering.

The polyamine core comprises the structure according to formula (I). Polyamine cores having the structure according to formula (I) are suitably prepared by reaction of a polyamine with a compound having at least one epoxide group. Preferably, the compound having at least one epoxide group has 3 to 25 carbon atoms. More preferably, the compound has 4 to 20 carbon atoms. It is particularly preferred to use epoxide compounds having one epoxide group per molecule.

Suitable compounds having at least one epoxide group are glycidylethers, glycidylesters, epoxidized olefins, suitably epoxidized alpha-olefins.

Preferred glycidylethers are glycidylethers having a C2 to C30 hydrocarbyl group attached to the ether atom. The hydrocarbyl group can be aliphatic (including cycloaliphatic), aromatic, araliphatic and it can be linear or branched, saturated or unsaturated. Preferably, the group is selected from C4 to C24 aliphatic groups and substituted or non-substituted phenyl groups. Very preferably, the group is selected from saturated C6 to C18 aliphatic group, like a C8 to C16 alkyl group. Suitable examples are n-butyl glycidyl ether, 2-ethylhexyl glycidyl ether, C8-C10 aliphatic glycidyl ether, C12-C14 aliphatic glycidyl ether, C13-C15-alkyl glycidyl ether, oleyl glycidyl ether, allyl glycidyl ether as well as cresyl glycidyl ether, p-tert-butyl phenyl glycidyl ether, nonyl phenyl glycidyl ether, phenyl glycidyl ether, naphthyl glycidyl ether. Preferred examples are 2-ethylhexyl glycidyl ether and C12-C14 aliphatic glycidyl ether, and C13-C15-alkyl glycidyl ether.
Preferred glycidylesters are glycidylesters having a C2 to C30 hydrocarbyl group attached to the ester group. The hydrocarbyl group can be aliphatic (including cycloaliphatic), aromatic, araliphatic and it can be linear or branched, saturated or unsaturated. Preferably, the group is selected from C4 to C24 aliphatic groups and substituted or non-substituted phenyl groups. Very preferably, the group is selected from saturated C6 to C18 aliphatic group, like a C8 to C16 alkyl group.

Suitable examples are 2-ethylhexyl glycidyl ester and the glycidyl ester of neodecanoic acid.

Preferred epoxidized olefins are those based on alpha-olefins comprising 4 to 30 carbon atoms. The hydrocarbyl group attached to the epoxy group can be aliphatic (including cycloaliphatic), aromatic, araliphatic and it can be linear or branched. Preferably, the group attached to the epoxy group is selected from C4 to C24 aliphatic groups and substituted or non-substituted phenyl groups. Very preferably, the group is selected from saturated C6 to C18 aliphatic groups, like a C8 to C16 alkyl group.

Suitable examples for epoxidized olefins are 1,2-hexene oxide, 1,2-octene oxide, 1,2-nonene oxide, 1,2-undecene oxide, 1,2-dodecene oxide, 1,2-octadecene oxide, 4-methyl-1,2-pentene oxide, 1,2-butene oxide, styrene oxide, butadiene monoxide, isoprene monoxide, cyclopentene oxide, and 2-ethyl-1,2-butene oxide.

Preferably, in formula (I) the organic group of R² and R³ is a hydrocarbyl group or an organic group comprising an ether group or an ester group. Due to the ring opening of the oxirane group during the reaction of the polyethylenimine with the epoxide, one of R² or R³ in formula (I) s a hydrogen atom.

If the nitrogen atom of structure (I) is a secondary amine, R¹ is hydrogen. Secondary amines may undergo further modification with a compound having at least one epoxide group. In that case, the reaction process leads to the conversion of a secondary amine to a tertiary amine wherein R¹ is

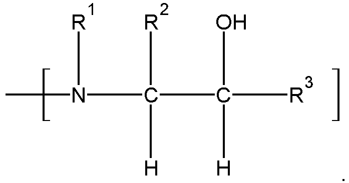

Additionally, polyethyleneimine may comprise non-terminal secondary amine groups. If such groups react with epoxide groups, polyethyleneimine of structure (I) wherein R¹ is part of the polyethyleneimine is formed. That means, that R¹ comprises at least one repeating unit comprising one nitrogen atom and two CH2 groups.

In a preferred embodiment, the polyamine core is the reaction product of polyethyleneimine with at least one compound having at least one epoxide group in which the molar ratio of total amine groups of the polyethylene imine and epoxide groups from the compound having at least one epoxide group is between 100.0 : 30.0 and 100.0 : 0.3, preferably between 100.0 : 20.0 and 100.0 : 1.0, more preferably between 100.0 : 15.0 and 100.0 : 2.0, and most preferably between 100.0 : 13.0 and 100.0 : 3.0, such as between 100.0 : 10.0 and 100.0 : 4.0.

In another preferred embodiment, the polyamine core is the reaction product of polyethyleneimine with at least one compound having at least one epoxide group in which the molar ratio of primary amine groups of the polyethylene imine and epoxide groups from the compound having at least one epoxide group is between 100.0 : 80.0 and 100.0 : 1.0, preferably between 100.0 : 50.0 and 100.0 : 3.0, more preferably between 100.0 : 40.0 and 100.0 : 6.0, and most preferably between 100.0 : 35.0 and 100.0 : 8.0, such as between 100.0 : 30.0 and 100.0 : 10.0.

As mentioned above, the polymer comprises a plurality of polyester segments linked to the polyamine core via ionic bonds.
Suitable polyester segments may be produced by reacting dicarboxylic acids and their esterifiable derivatives such as anhydrides, acid chlorides or dialkyl esters, such as dimethyl esters or diethyl esters, by reacting with diols and monofunctional carboxylic acids. If necessary, the formation of dihydroxypolyesters can be suppressed by the use of corresponding stoichiometric quantities of monofunctional carboxylic acids. The esterification can be performed in bulk or by azeotropic esterification in the presence of an entrainment agent. Such condensation reactions are performed, for example, at temperatures from about 50° C. to 250° C. Examples of dicarboxylic acids that can be used in this way are succinic acid, maleic acid, fumaric acid, glutaric acid, adipic acid, sebacic acid, pimelic acid, phthalic acid or dimerized fatty acids and their isomers as well as their hydrogenation products. Examples of diols that can be used in this way are ethylene glycol, 1,2-propanediol, 1,3-propanediol, 1,4-butanediol, 1,6-hexanediol, neopentyl glycol, cis-1,2-cyclohexanedimethanol, trans-1,2-cyclohexanedimethanol, and polyglycols based on ethylene glycol and/or propylene glycol. Corresponding monocarboxylic acids used as starting components preferably have 1 to 42, especially 4 to 18, preferably 8 to 14 carbon atoms and can be saturated or unsaturated, aliphatic or aromatic, linear, branched and/or cyclic. Examples of corresponding, suitable monocarboxylic acids are stearic acid, isostearic acid, oleic acid, lauric acid and benzoic acid. Additional suitable acids are the tertiary monocarboxylic acids, also known as Koch acids, such as 2,2-dimethylpentanoic acid, tertnonanoic acid and neodecanoic acid. Koch acids of this type are also known as commercial products under the names of Versatic^{®} acids (Shell), Neo-acids (Exxon) or Cekanoic acids (Kuhlmann). The Versatic^{®} acids are named according to the total number of carbon atoms that the molecule contains. Suitable examples are the Versatic^{®} acids 5, 6, 9, and 10.
The polyester segments suitably contain at least 5, preferably 6 to 70, ester groups.
In a further embodiment, the polyester segments additionally contain ether groups.
The polyester segments are linked to the polyamine core via ionic bonds. To allow the formation of ionic bonds between polyamine core and the polyester segments, the polyester segments suitably comprise carboxylic acid groups. Carboxylic acid groups of the polyester segment readily from salts with amine groups present in the polyamine core, thereby linking the linking the polyamine core to the polyester segments via ionic bonds. In preferred embodiments, the average number of carboxylic acid groups of the polyester segments is in the range of 0.9 to 1.5. The carboxylic acid groups may be present as terminal or lateral groups. Terminal carboxylic acid groups are preferred.
A carboxlic acid functionality higher than 1.5 may cause cross-linking, which usually leads to deterioration of solubility, reduced compatibility, excessive viscosities or inadequate compatibility.

Particularly suitable polyester segments are those that can be obtained by polycondensation of one or more, optionally alkyl-substituted, hydroxycarboxylic acids such as ricinoleic acid or 12-hydroxystearic acid and/or ring-opening polymerization of the corresponding lactones, such as propiolactone, valerolactone, and caprolactone. Hence it is preferred that the polyester segments comprise repeating units of the formula -[-O-(CH₂)ₙ-C(=O)]-, wherein n is an integer in the range of 3 to 6. The lactone polymerization is performed using known methods, initiated with, for example, p-toluenesulfonic acid or dibutyltin dilaurate, at temperatures from about 50° C. to 200° C. Particularly preferred are polyesters on the basis of ε-caprolactone, optionally in combination with δ-valerolactone.
Often at least 50% by weight, preferably 70 to 100% by weight, of the polyester segments are linear, monocarboxyl-functional caprolactone polyesters.
The polyester segments suitably have a weight average molecular weight in the range of 500 to 10000 g/mol, preferably of 800 to 8000 g/mol.
Weight average molecular weights of less than 500 or more than 10000 often impair the universal compatibility.
The number average molecular weight Mₙ and the weight average molecular weight M_{w} can be determined by gel permeation chromatography (GPC) according to DIN 55672 part 3 [2016-03]

As mentioned above, the polyester segments of the polymer are linked to the polyamine core via ionic bonds. In preferred embodiments, the polymer further comprises polyester segments linked to the polyamine core via an amide group.
In exemplary embodiments, 10 to 40 % of the polyester segments are linked to the polyamine core via amide groups, and wherein 90 to 60 % of the polyester segments are linked to the polyamine core via ionic bonds. The ratio of polyester segments being linked to the polyamine core via ionic bonds and via amide bonds can be controlled by the temperature at which the polyamine core and the polyester segments are reacted. Lower temperatures in the range of 60 to 100°C favor the formation of ionic bonds. Higher temperatures above 120 °C lead to the formation of amide bonds, in addition to ionic bonds.

The polymer used in the composition of the invention is suitably prepared by two-step process. In the first step, a polyamine is reacted with a compound having at least one epoxide group. Preferably, the polyamine has at least the amino groups selected from primary amino groups and secondary amino groups. The compound having at least one epoxide group preferably has one epoxide group. The polyamine compound and the compound having at least one epoxide groups are mixed and allowed to react to form the polyamine core at a temperature in the range of 60 to 150°C for a period to substantially react all epoxide groups. Generally, the reaction time is in the range of 30 to 300 minutes. In a second reaction step the polyamine core is suitably reacted with a polyester segment, generally a polyester segment having on carboxylic acid group. The polyamine core and the polyester segment are suitably reacted by mixing and heating to a temperature in the range of 60 to 150°C, preferably 80 to 140 °C. A suitable reaction time is in the range of 30 minutes to 300 minutes. The polyester segments are prepared as described above according to generally know methods. The preparation of suitable polymers for use in the composition according to the invention is also described in the example section of US 9574121 B2.

The composition of the invention further comprises an electrically conductive carbon-based material. A carbon-based material is a material which consists for 90 to 100 % by weight of carbon. For use in the field of electrode manufacture for batteries, a carbon-based material is selected which is electrically conductive. Examples of suitable electrically conductive carbon-based materials include carbon black, carbon nano tubes, graphite, carbon fibers, graphene, fullerenes, and mixtures thereof. Preferred carbon-based materials are carbon black, graphene, and carbon nano tubes.

Generally, the weight ratio of polymer a) to electrically conductive carbon-based material b) in the composition of the invention is in the range of 70:100 to 3:100, preferably in the range of 50:100 to 5:100, and most preferably in the range of 30:100 to 7:100.

The composition of the invention is intended to be used for manufacturing an electrode for a rechargeable battery. Therefore, the composition suitably comprises a cathode active material for a rechargeable battery.
In the cathode of a lithium ion rechargeable battery, a transition metal oxide containing lithium, or a lithium metal phosphate, such as LiFePO₄, is generally used as a cathode active material, and preferably, an oxide mainly containing lithium and at least one kind of transition metal element selected from the group consisting of Ti, V, Cr, Mn, Fe, Co, Ni, Mo, and W, which is a compound having a molar ratio of lithium to a transition metal element of 0.3 to 2.2, is used. More preferably, an oxide mainly containing lithium and at least one kind of transition metal element selected from the group consisting of V, Cr, Mn, Fe, Co, and Ni, which is a compound having a molar ratio of lithium to a transition metal of 0.3 to 2.2, is used. It should be noted that Al, Ga, In, Ge, Sn, Pb, Sb, Bi, Si, P, B, and the like may be contained in a range of less than 30% by mole with respect to the mainly present transition metal. Of the above-mentioned active materials, it is preferred that at least one kind of material having a spinel structure represented by a general formula LiₓMO₂ (M represents at least one kind of Co, Ni, Fe, and Mn, and x is 0 to 1.2), or Li_{y}N₂O₄ (N contains at least Mn, and y is 0 to 2) be used.

Further, as the cathode active material, there may be particularly preferably used at least one kind of materials each including Li_{y}MₐD₁₋ₐO₂ (M represents at least one kind of Co, Ni, Fe, and Mn, D represents at least one kind of Co, Ni, Fe, Mn, Al, Zn, Cu, Mo, Ag, W, Ga, In, Sn, Pb, Sb, Sr, B, and P with the proviso that the element corresponding to M being excluded, y=0 to 1.2, and a=0.5 to 1) and materials each having a spinel structure represented by Li_{z} (N_{b}E_{1-b}) ₂O₄ (N represents Mn, E represents at least one kind of Co, Ni, Fe, Mn, Al, Zn, Cu, Mo, Ag, W, Ga, In, Sn, Pb, Sb, Sr, B and P, b=1 to 0.2, and z=0 to 2).

Specifically, there are exemplified LiₓCoO₂, LiₓNiO₂, LiₓMnO₂, LiₓCoₐNi₁₋ₐO₂, LiₓCo_{b}V_{1-b}O_{z}, LiₓCo_{b}Fe_{1-b}O₂, LiₓMn₂O₄, LiₓMn_{c}Co_{2-c}O₄, LiₓMn_{c}Ni_{2-c}O₄, LiₓMn_{c}V_{2-c}O₄, and LiₓMn_{c}Fe_{2-c}O₄ (where, x=0.02 to 1.2, a=0.1 to 0.9, b=0.8 to 0.98, c=1.6 to 1.96, and z=2.01 to 2.3). As the most preferred transition metal oxide containing lithium, there are given LiₓCoO₂, LiₓNiO₂, LiₓMnO₂, LiₓCoₐNi₁₋ₐO₂, LiₓMn₂O₄, and Li_{X}Co_{b}V_{1-b}O_{z} (x=0.02 to 1.2, a=0.1 to 0.9, b=0.9 to 0.98, and z=2.01 to 2.3). It should be noted that the value of x may increase and decrease in accordance with charge and discharge.

Although the average particle size of the cathode active material is not particularly limited, the size is preferably 0.1 to 50 µm. It is preferred that the volume of the particles of 0.5 to 30 µm be 95% or more. It is more preferred that the volume occupied by the particle group with a particle diameter of 3 µm or less be 18% or less of the total volume, and the volume occupied by the particle group of 15 µm or more and 25 µm or less be 18% or less of the total volume.

In a preferred embodiment, the cathode active material comprises at least one of Lithium Nickel-Cobalt-Aluminum Oxide and Lithium Nickel-Manganese-Cobalt oxide.

The composition of the invention suitably is a liquid or paste at a temperature of 20 °C. This facilitates the preparation of electrodes from the composition. To render the composition liquid or paste-like, the composition preferably further comprises at least one organic solvent in an amount of 10 to 90 % by weight, calculated on the total weight of the composition. Generally, an organic solvent is selected that is capable of dissolving the polymeric or oligomeric components of the composition. The organic solvent may also comprise more than one type of organic solvent, for example a mixture of two or more types of solvents. Examples of suitable solvents include ester solvents, such as methyl acetate, ethylacetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene, toluene, and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Examples of further suitable solvents include aprotic dipolar solvents, such as dimethyl sulfoxide, dimethyl formamide or N-methyl pyrrolidone, or other solvents comprising an amide group. In the case of using water as a solvent, it may be preferred to use further include a thickener. The amount of the solvent is adjusted so as to obtain a viscosity at which a paste can be applied to a collector easily.
Generally, the solvent is present in the composition of the invention in an amount of 10 to 90 % by weight, preferably 20 to 80 % by weight. calculated on the total weight of the composition.

In a further preferred embodiment, the composition further comprises a polymeric binder. The binder improves the adhesion between the positive electrode active material particles and the adhesion between the positive electrode active material and a current collector. Examples of the binder include known binders such as: fluorine-based polymers such as polyvinylidene fluoride, polyvinylidene fluoride-hexafluoropropylene copolymer, and polytetrafluoroethylene; rubber-based binders such as styrene-butadiene rubber (SBR), ethylene-propylene-diene monomer rubber (EPDM), a sulfonated EPDM, and a fluorine rubber; polyethylene; polypropylene; polyvinyl alcohol; polyvinylpyrrolidone, polyacrylonitrile; carboxymethyl cellulose (CMC); starch; hydroxypropyl cellulose; regenerated cellulose; and binders based on polyacrylates. If so desired, the binder may be used in the form of an aqueous dispersion.

A suitable use amount of the binder is 1.0 to 50.0 parts by mass in terms of 100 parts by mass of the non-volatile material of the composition, and in particular, the used amount is preferably about 1.0 to 20.0, more preferably 1.0 to 10.0 parts by mass of the non-volatile material of the composition.

The composition for the invention is very suitable for preparing an electrode for a rechargeable battery. Accordingly, the invention also relates to the use of the composition of the invention for preparing an electrode for a rechargeable battery, as well as to a process of preparing a rechargeable electrical battery electrode, wherein the composition according to the invention is used to prepare the battery electrode. Preferably, the electrode is a cathode.

The composition of the invention can be prepared by mixing the components to prepare a paste or slurry, for example by kneading. A solvent can be used at a time of kneading. Examples of the solvent include known solvents such as: dimethylformamide and isopropanol; toluene and N-methylpyrrolidone in the case of a fluorine-based polymer; water in the case of SBR. In the case of the binder using water as a solvent, it is preferred to use a thickener in the composition. The amount of the solvent is adjusted so as to obtain a viscosity at which a paste can be applied to a collector easily.
An electrode may be formed of a molding of the above-mentioned paste for an electrode. The electrode is obtained, for example, by applying the paste for an electrode to a collector, followed by drying and pressure molding.
Examples of the collector include foils and mesh of aluminum, nickel, copper, stainless steel and the like. The coating thickness of the paste is generally 40 to 200 µm. There is no particular limitation to the paste coating method, and an example of the coating method includes a method involving coating with a doctor blade or a bar coater, followed by molding with roll pressing or the like.
Examples of the pressure molding include roll pressure molding, compression molding, and the like. The pressure for the pressure molding is preferably about 1 to 3 t/cm². As the density of the electrode increases, the battery capacity per volume generally increases. However, if the electrode density is increased too much, the cycle characteristic is generally degraded. If the paste for an electrode in a preferred embodiment of the present invention is used, the degradation in the cycle characteristic is small even when the electrode density is increased. Generally, the electrode density is in the range of 1.0 to 4.0 g/cm³ . In some embodiments, the electrode density of a cathode is in the range of 2.0 to 3.5 g/cm³, and the density of an anode is in the range of 1.2 to 2.0 g/cm³.

The invention further relates to an electrical battery electrode, comprising the composition according to the invention, as well as to a rechargeable electrical battery, comprising the electrode. The expression battery encompasses a single electrochemical cell that contains electrodes, a separator, and an electrolyte, as well as a collection of cells or cell assemblies.

In a lithium ion rechargeable battery, a separator may be provided between a cathode and anode. Examples of the separator include non-woven fabric, cloth, and a microporous film each mainly containing polyolefin such as polyethylene and polypropylene, a combination thereof, and the like.

The invention further relates to the use of a polymer having
i) a polyamine core comprising a plurality of amine groups and comprising the structure of formula (I) 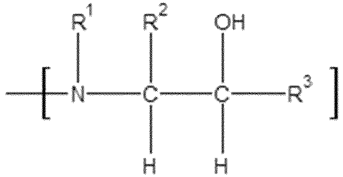 wherein R¹ is H or part of the polyamine core, R² is H or an organic group, R³ is H or an organic group, with the proviso that at least one of R² and R³ is H,
ii) a plurality of polyester segments linked to the polyamine core via ionic bonds, for the preparation of a composition for preparing an electrode for a rechargeable battery.

### Examples

### Polyester 1

140.00 g (0.67 mol) lauric acid and 797.78g (6.99 mol) epsilon-caprolactone were added in a 4-neck flask and heated up to 90 °C. 0.47g tetra n-butyl zirconate were added. The reaction mixture was kept at 90 °C for a period of 4 hours, then heated to 190 °C and kept at this temperature for 1 h. Thereafter, the material was cooled to room temperature. The theoretical calculated molecular weight of the polyester is 1400 g/mol.

### Polyester 2

101.55 g (0.51 mol) lauric acid and 927.96 g (8.13 mol) epsilon-caprolactone were added in a 4-neck flask and heated up to 90 °C. 0.47 g tetra n-butyl zirconate were added. The reaction mixture was kept at 90 °C for a period of 4 hours, then heated to 190 °C and kept at this temperature for 1 h. Thereafter, the material was cooled to room temperature. The theoretical calculated molecular weight of the polyester is 2028 g/mol.

### Polyester 3

101.55 g (0.51 mol) lauric acid, 203.35g (2.04 mol) gamma-valerolactone and 694.60 g (6.09 mol) epsilon-caprolactone were added in a 4-neck flask and heated up to 90 °C. Then, 0.47g tetra n-butyl zirconate were added. The reaction mixture was kept at 90 °C for a period of 4 hours, then heated to 190 °C and kept at this temperature for 1 h. Thereafter, the material was cooled to room temperature. The theoretical calculated molecular weight of the polyester is 1970 g/mol.

### Preparation of polymers having a polyamine core and a plurality of polyester segments

Raw Materials used:
PEI 1 = polyethyleneimine 10.000 g/mol, Epomin SP200, Nippon Shokubai
PEI 2 = polyethyleneimine 2000 g/mol, Lupasol PR 8515, BASF
PEI 3 = polyethyleneimine 1300 g/mol, Lupasol G 20, BASF

### Comparative Example 1

7.0 g (0.0007 mol) PEI 1 and 93.0 g (0.0694 mol) Polyester 1 were added in a 4-neck flask and heated to 150 °C and kept at this temperature for 5 h, before cooling the reaction mixture to room temperature. The acid number is 24.1 mg KOH/g. This corresponds to 66.5 % of the polyester segments linked to the polyamine core via ionic bonds.

### Example 1

7.0 g (0.0007 mol) PEI 1 were added in a 4-neck flask and heated up to 110 °C. 0.9 g (0.0056 mol) cresyl glycidyl ether was added and homogenized. The mixture was heated to 130 °C and 93.00 g (0.0694mol) Polyester 1 was added. The mixture was kept at this temperature for 3 h, before cooling the reaction mixture to room temperature. The acid number is 31.1 mg KOH/g. This corresponds to 87.6 % of the polyester segments linked to the polyamine core via ionic bonds.

### Comparative Example 2

24.00 g (0.01201 mol) PEI 2 were added in a 4-neck flask and heated up to 80 °C. 72.00 g (0.03599 mol) Polyester 2 and 24.00g (0.01201 mol) Polyester 3 were added. The mixture was heated to 120 °C and kept at this temperature for 3 h, before cooling the reaction mixture to room temperature. The acid number is 22.4 mg KOH/g. This corresponds to 87.6 % of the polyester segments linked to the polyamine core via ionic bonds.

### Example 2

8.39 g (0.0042 mol) PEI 2 were added in a 4-neck flask and heated up to 110 °C. 11.62 g (0.05095 mol) glycidyl neodecanoate was slowly added and homogenized during a period of 0.5 h. Then, 25.17 g (0.01258 mol) Polyester 2 and 8.39 g (0.0042 mol) Polyester 3 were added. The mixture was heated to 130 °C and kept at this temperature for 3 h, before cooling the reaction mixture to room temperature. The acid number is 16.3 mg KOH/g. This corresponds to 92.6 % of the polyester segments linked to the polyamine core via ionic bonds.

### Example 3

7.00 g (0,0007mol) PEI 1 were added in a 4-neck flask and heated up to 110 °C. 2.52 g (0.0111 mol) glycidyl neodecanoate was added and homogenized for 0.5h. The mixture was heated to 130 °C and 93.00 g (0.0694mol) Polyester 1 was added. The mixture was kept at 130°C for 3 h, before cooling the reaction mixture to room temperature. The acid number is 32.8 mg KOH/g. This corresponds to 86.3 % of the polyester segments linked to the polyamine core via ionic bonds.

### Example 4

7.0 g (0.0007 mol) PEI 1 were added in a 4-neck flask and heated to 110 °C. 0.63 g (0.0028 mol) glycidyl neodecanoate was added and homogenized for 0.5 h. The mixture was heated to 130 °C and 93.00 g (0.0694 mol) Polyester 1 was added. The mixture was kept at 130°C for 3 h, before cooling the reaction mixture to room temperature. The acid number is 33.0 mg KOH/g. This corresponds to 85.3 % of the polyester segments linked to the polyamine core via ionic bonds.

### Example 5

7.0 g (0.0007 mol) PEI 1 were added in a 4-neck flask and heated to 110 °C. 0.93 g (0.0055 mol) ethylhexyl glycidyl ether was added and homogenized for 0.5 h. The mixture was heated to 130 °C and 93.00 g (0.0694 mol) Polyester 1 was added. The mixture was kept at 130°C for 3 h, before cooling the reaction mixture to room temperature. The acid number is 33.0 mg KOH/g. This corresponds to 85.5 % of the polyester segments linked to the polyamine core via ionic bonds.

### Example 6

7.0 g (0.0007 mol) PEI 1 were added in a 4-neck flask and heated to 110 °C. 0.91 g (0.0055 mol) cresyl gycidyl ether was added and homogenized for 0.5h. The mixture was heated to 130 °C and 93.00 g (0.0694 mol) Polyester 1 was added. The mixture was kept at 130°C for 3 h, before cooling the reaction mixture to room temperature. The acid number is 33.0 mg KOH/g. This corresponds to 85.7 % of the polyester segments linked to the polyamine core via ionic bonds.

### Example 7

12.2 g (0.0925 mol) PEI 3 were added in a 4-neck flask and heated to 110 °C. 16.67 g (0.0731 mol) glycidyl neodecanoate was added and homogenized for 0.5h. 34.81 g (0.0174 mol) Polyester 2 and 11.6g (0.0058 mol) Polyester 3 were added. The mixture was heated to 130 °C and kept at this temperature for 3 h, before cooling the reaction mixture to room temperature.

### Comparative Example 3

12.2 g (0.0925 mol) PEI 3 were added in a 4-neck flask and heated to 80 °C. 34.81 g (0.0174mol) Polyester 2 and 11.6g (0.0058 mol) Polyester 3 were added. The mixture was heated to 130 °C and kept at this temperature for 3 h, before cooling the reaction mixture to room temperature. The acid number is 18.6 mg KOH/g. This corresponds to 84.1 % of the polyester segments linked to the polyamine core via ionic bonds.

### Example 8

12.55 g (0.00125mol) PEI 1 were added in a 4-neck flask and heated to 110 °C. 16.13 g (0.0708mol) glycidyl neodecanoate was added and homogenized for 0.5h. 33.69 g (0.0168mol) Polyester 2 and 11.22 g (0.0056mol) Polyester 3 were added. The mixture was heated to 130 °C and kept at this temperature for 3 h, before cooling the reaction mixture to room temperature.

### Comparative Example 4

12.55 g (0.00125 mol) PEI 1 were added in a 4-neck flask and heated up to 80 °C. 33.69 g (0.0171 mol) Polyester 2 and 11.22g (0,0056 mol) Polyester 3 were added. The mixture was heated to 130 °C and kept at this temperature for 3 h, before cooling the reaction mixture to room temperature.

### Application Tests

In a 250 ml polypropylene cup 0.3 g of the dispersant was homogenized in 16.7 g of N-methyl pyrrolidone. Next, 3 g of conductive carbon black (IMERYS C-Nergy SUPER C 65) and 40 g of glass beads (0.75mm) were added. Dispersion was carried out using a Hauschild SpeedMixer DAC 400 for 9 minutes at 1400 rpm followed by sieving-off the glass beads. Finally, the slurries were evaluated by measurement of the viscosity on an Anton Paar MCR 102 at 23°C in cone/plate geometry (cone with 25 mm diameter and 1° angle).

The result of the viscosity measurements is summarized in the table below.

| Example | Viscosity [mPas] | | |
|---|---|---|---|
| | at 1 (1/s) | at 10 (1/s) | at 100 (1/s) |
| Compar. 1 | Sieving not possible | | |
| 1 | 405 | 160 | 94 |

| Compar. 2 | Sieving not possible | | |
|---|---|---|---|
| 2 | 572 | 347 | 109 |
| 3 | 1558 | 701 | 125 |
| 4 | 210 | 95 | 50 |
| 5 | 370 | 141 | 74 |
| 6 | 344 | 125 | 70 |
| Compar. 3 | 3356 | 1682 | 295 |

The tests carried out with comparative Examples 1 and 2 led to slurries which had such a high viscosity that sieving-off the glass beads was not possible. Hence, these comparative dispersants caused unacceptably high viscosity of the slurries. Comparative Example 3 likewise caused a slurry having an unacceptably high viscosity. The slurries prepared with the examples according to the invention all have a significantly lower viscosity than the comparative examples. This conclusion is valid for various shear rates.

In a 250 ml polypropylene cup 0.3 g of the dispersant is homogenized in 16.7 g of NMP. Next, 3 g of conductive carbon black (Denka Black Li 400) and 40 g of glass beads (0.75mm) were added. Dispersion was carried out using a Hauschild SpeedMixer DAC 400 for 9 minutes at 1400 rpm followed by sieving-off the glass beads. Finally, the slurries were evaluated by measurement of the viscosity on an Anton Paar MCR 102 at 23°C in cone/plate geometry (cone with 25 mm diameter and 1° angle).

The result of the viscosity measurements is summarized in the table below.

| Example | Viscosity [mPas] | | |
|---|---|---|---|
| | at 1 (1/s) | at 10 (1/s) | at 100 (1/s) |
| Compar. 1 | Sieving not possible | | |
| 4 | 29 | 10 | 8 |
| 5 | 9 | 8 | 8 |
| 6 | 12 | 8 | 8 |
| 8 | 16 | 13 | 10 |
| Compar. 4 | 13055 | 2565 | 398 |

The tests carried out with comparative Examples 1 led to a slurry which had such a high viscosity that sieving-off the glass beads was not possible. Hence, this comparative dispersant caused unacceptably high viscosity of the slurry. Comparative Example 4 likewise caused a slurry having an unacceptably high viscosity. The slurries prepared with the examples according to the invention all have a significantly lower viscosity than the comparative examples. This conclusion is valid for various shear rates.

## Claims

1. A composition comprising
a) a polymer having
i) a polyamine core comprising a plurality of amine groups and comprising the structure of formula (I) 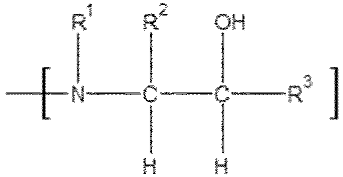 wherein R¹ is H or part of the polyamine core, R² is H or an organic group, R³ is H or an organic group, with the proviso that at least one of R² and R³ is H,
ii) a plurality of polyester segments linked to the polyamine core via ionic bonds, and
b) an electrically conductive carbon-based material
wherein the weight ratio of polymer a) to electrically conductive carbon-based material b) in the composition of the invention is in the range of 70:100 to 3:100.

2. The composition according to claim 1, wherein the polyamine core is a polyethyleneimine.

3. The composition according to claim 1 or 2, wherein the polyamine core has a weight average molecular weight in the range of 300 to 25000 g/mol.

4. The composition according to any one of the preceding claims, wherein R² and R³ are independently selected from hydrocarbyl groups, organic groups comprising an ether group, and organic groups comprising an ester group.

5. The composition according to any one of the preceding claims, wherein the polymer further comprises polyester segments linked to the polyamine core via an amide group.

6. The composition according to claim 5, wherein 10 to 40 % of the polyester segments are linked to the polyamine core via amide groups, and wherein 90 to 60 % of the polyester segments are linked to the polyamine core via ionic bonds.

7. The composition according to any one of the preceding claims, wherein the polyester segments comprise repeating units of the formula -[-O-(CH₂)ₙ-C(=O)]-, wherein n is an integer in the range of 3 to 6.

8. The composition according to any one of the preceding claims, wherein the carbon-based material comprises at least one of carbon black, carbon nano tubes, graphite, carbon fibers, graphene, and fullerenes.

9. The composition according to any one of the preceding claims, wherein the weight ratio of polymer a) to electrically conductive carbon-based material b) in the composition of the invention is in the range of 50:100 to 5:100.

10. The composition according to any one of the preceding claims, wherein the composition further comprises a cathode active material for a rechargeable battery.

11. The composition according to claim 10, wherein the cathode active material comprises at least one of Lithium Nickel-Cobalt-Aluminum Oxide and Lithium Nickel-Manganese-Cobalt oxide.

12. The composition according to any one of the preceding claims, wherein the composition further comprises at least one organic solvent in an amount of 10 to 90 % by weight, calculated on the total weight of the composition.

13. The composition according to any one of the preceding claims, wherein the composition further comprises a polymeric binder which is different from the polymer comprised in the composition according to any one of the preceding claims 1 to 12.

14. Use of the composition according to any one of the preceding claims for preparing an electrode for a rechargeable battery.

15. A process of preparing a rechargeable electrical battery electrode, wherein the composition according to any one of the preceding claims 1 to 13 is used to prepare the battery electrode.

16. An electrical battery electrode, comprising the composition according to any one of the preceding claims 1 to 13.

17. A rechargeable electrical battery, comprising the electrode according to claim 16.

18. Use of a polymer having
i) a polyamine core comprising a plurality of amine groups and comprising the structure of formula (I) 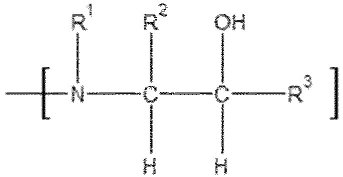 wherein R¹ is H or part of the polyamine core, R² is H or an organic group, R³ is H or an organic group, with the proviso that at least one of R² and R³ is H,
ii) a plurality of polyester segments linked to the polyamine core via ionic bonds, for the preparation of a composition for preparing an electrode for a rechargeable battery.
